# EUROPEAN PATENT APPLICATION

(11) **EP 1 845 296 A2**
(43) Date of publication of application: **17.10.2007**
(21) Application number: 07251585.1
(22) Date of filing: 13.04.2007
(51) Int. Cl.: F16L 9/12, F16L 9/133, F16L 11/20, B60K 15/03

(54) **Multiple-layer pipe and tank for fuel**

(30) Priority: 13.04.2006 US 744825 P; 06.04.2007 US 697528
(71) Applicant: STANT MANUFACTURING INC., Connersville, IN 47331-1696 (US)
(72) Inventor: McClung, Chad A., Connersville, Indiana, IN47331 (US); DeCapua, Dennis, Greenfield, Indiana, IN46140 (US); Steustoff, Bradley L., Brookville, Indiana, IN47012 (US)
(74) Representative: Croston, David

(57) **Abstract**

A multi-layer shell is configured to provide a fuel tank and a fuel tank filler neck. One layer has a low-permeation material configured to inhibit hydrocarbon permeation.

## Description

This application claims priority under 35 U.S.C. § 119(e) to U.S. Provisional Application Serial No. 60/744,825, filed April 13, 2006 and to U.S. Utility Application Serial No. 11/697,528 filed April 6, 2007, both of which are expressly incorporated by reference herein.

The present disclosure relates to a fuel/vapor-containing and conveying apparatus, and particularly to fuel tank filler necks, fuel/vapor lines, fuel tanks, and portable fuel containers. More particularly, the present disclosure relates to multiple- layer fuel tank filler necks and multiple-layer fuel tanks.

In accordance with the present disclosure, a fuel tank filler neck comprises a pipe including multiple layers and a fuel tank comprises a wall structure including multiple layers. One of the multiple layers is engineered to act as a barrier to prevent hydrocarbon permeation. Aspects of the present invention are provided by the independent claims appended hereto. A further aspect of the present invention provides a pipe consisting of at least two-layers, the two-layers comprising an exterior side wall providing a first layer, an interior barrier layer providing a second layer and being located interior of the exterior side wall, the interior barrier layer including an interior surface defining and surrounding a fluid passageway formed by the interior barrier layer, and means for chemically bonding an interior surface of the exterior side wall to an exterior surface of the interior barrier layer, wherein the interior barrier layer is made of a low-permeation material which acts to contain within the exterior side wall any fuel vapor flowing in the fluid passageway so that hydrocarbon material associated with that fuel vapor is retained in the fluid passageway. An intermediate adhesive layer may bond the exterior side wall to the interior barrier layer.

In illustrative embodiments, the multiple layers are bonded to one another. An inner-most layer of the multiple layers of the pipe defines a fluid passageway and an inner-most layer of the multiple layers of the fuel tank defines a fuel storage area.

Also, in illustrative embodiments, the fuel tank filler neck includes two pipes. One of the pipes carries liquid fuel into a fuel tank and the other pipe carries fuel vapor away from the fuel tank.

In illustrative embodiments, one of the layers is made of a material having electrically-conductive properties such as, for example, carbon black, carbon nanotubes, or stainless steel fibers. The electrically-conductive layer acts as a grounding conduit for static electricity generated by any fuel vapor or liquid fuel flowing in the fluid passageway or extant in the fuel storage area.

Features of the present disclosure will become apparent to those skilled in the art upon consideration of the following detailed description of illustrative embodiments exemplifying the best mode of carrying out the disclosure as presently perceived.

The detailed description particularly refers to the accompanying figures in which:
Fig. 1 A is a side elevation view of a tank system, with portions broken away, showing a fuel tank filler neck having an outer end providing an open mouth closed by a closure cap and a lower end coupled to a fuel tank, the fuel tank filler neck including a large-diameter liquid-intake fill pipe providing a first fluid passageway for carrying liquid fuel into an interior region of the fuel tank and a small-diameter vapor-discharge pipe providing a second fluid passageway for carrying fuel vapor from an interior region of the fuel tank to an upper portion of the fill pipe;
Fig. 1B is an enlarged perspective view of a portion of the fill tube of Fig. 1A showing the large-diameter liquid-intake fill pipe having the first fluid passageway and the small-diameter vapor-discharge pipe having the second fluid passageway and arranged to extend along the large-diameter liquid-intake fill pipe and coupled to the fill pipe by a web;
Fig. 2 is an enlarged perspective view, with portions broken away, of a two-layer pipe in accordance with the present disclosure, which two-layer pipe can be used to provide either one of the vapor-discharge pipe or the liquid-intake fill pipes of Figs. 1A and 1B;
Fig. 3 is an enlarged perspective view, with portions broken away, of a three-layer pipe in accordance with the present disclosure, which three-layer pipe can be used to provide either one of the vapor-discharge pipe or the liquid-intake fill pipe of Figs. 1A and 1B;
Fig. 4 is an enlarged diagrammatic view of a first embodiment of the pipe of Fig. 2 showing an internal barrier layer bonded to an outer layer and formed to define a fluid passageway;
Fig. 5 is an enlarged diagrammatic view of a second embodiment of the two-layer pipe of Fig. 2 showing an internal conductive barrier layer bonded to an outer layer and formed to define a fluid passageway;
Fig. 6 is an enlarged diagrammatic view of a first embodiment of the three-layer pipe of Fig. 3 showing an adhesive layer bonding an internal barrier layer to an outer layer and a fluid passageway surrounded by the barrier layer;
Fig. 7 is an enlarged diagrammatic view of a second embodiment of the three-layer pipe of Fig. 3 showing an adhesive layer bonding an internal conductive barrier layer to an outer layer and a fluid passageway surrounded by the conductive barrier layer.
Fig. 8 is an enlarged perspective view, with portions broken away, of a two-layer fuel tank in accordance with the present disclosure, which two-layer fuel tank can be used to provide the fuel tank of Fig. 1 or a fuel storage apparatus for other uses, and having a filler neck coupled thereto; and
Fig. 9 is an enlarged perspective view, with portions broken away, of a three-layer fuel tank in accordance with the present disclosure, which three-layer fuel tank can be used to provide the fuel tank of Fig. 1 or a fuel storage apparatus for other uses, and having a filler neck coupled thereto.

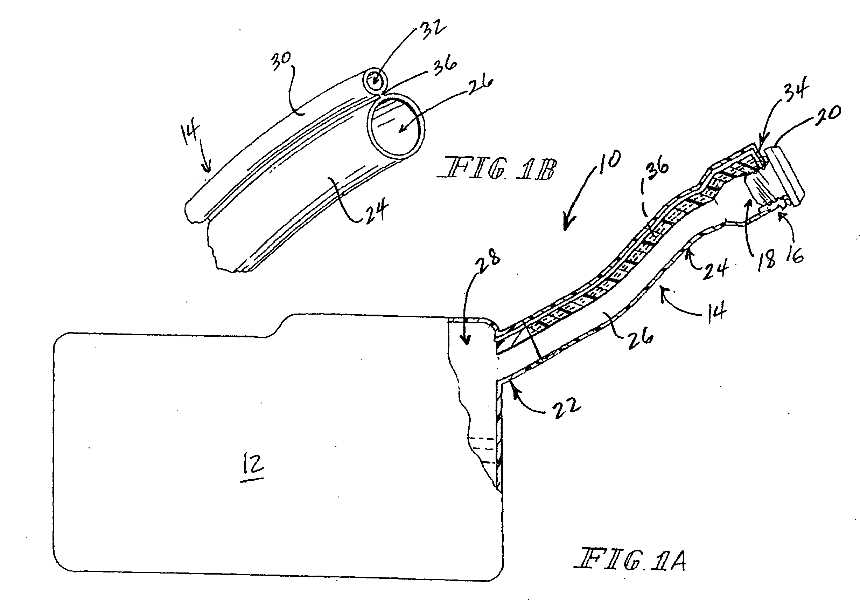

A vehicle fuel system 10 comprises a fuel tank 12 and a fuel tank filler neck 14 having an outer end 16, as shown, for example, in Fig. 1A. Outer end 16 provides an open mouth 18 closed by a closure cap 20 and a lower end 22 coupled to the fuel tank 12, as shown, for example, in Fig. 1A.

The fuel tank filler neck 14 includes a large-diameter liquid-intake fill pipe 24 providing a first fluid passageway 26 for conducting liquid fuel into an interior region 28 of fuel tank 12 and a small-diameter vapor-discharge pipe 30 providing a second fluid passageway 32 for conducting fuel vapor from interior region 28 of the fuel tank 12 to an upper portion 34 of fill pipe 24, as shown, for example, in Figs. 1A and 1B. As used herein, the word "fluid" means a substance, such as liquid or a gas, tending to flow or conform to the outline of its container.

In the illustrated embodiment, large-diameter liquid-intake fill pipe 24 and small-diameter vapor-discharge pipe 30 are interconnected by a web 36 as shown, for example, in Figs. 1A and 1B to form a monolithic fuel tank filler neck 14. Web 36 extends in an uninterrupted manner along the length of pipes 24 and 30. It is within the scope of this disclosure to provide interruptions in web 36 along its length. It is within the scope of this disclosure to vary the relative size and scale of pipes 24, 30 and web 36 to meet any particular flow and size requirements associated with filler neck 14. It is within the scope of this disclosure to form each pipe 24, 30 individually and to integrally or otherwise interconnect pipes 24, 30 to form fuel tank filler neck 14.

The present disclosure relates to two-layer and three-layer pipes and tanks. The present disclosure is applicable to blow molding and other forming processes and devices, as disclosed in U.S. Patent Application Serial No. 11/276,146, filed on February 15, 2006, which application is incorporated by reference herein.

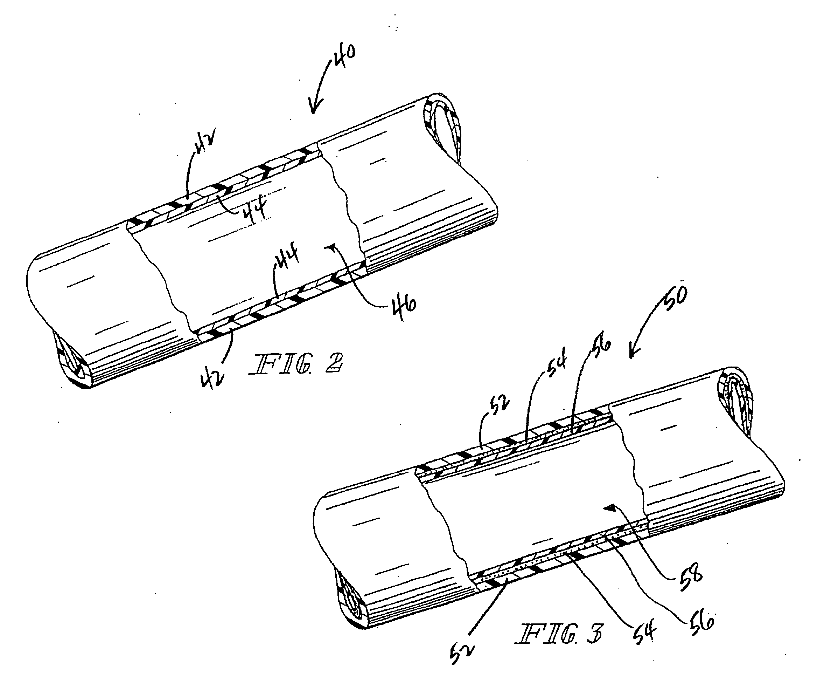

In an illustrative embodiment shown in Fig. 2, a two-layer pipe 40 consists essentially of an inner layer 44 defining fluid passageway 46 and an outer layer 42 around inner layer 44. Two-layer pipe 40 can be used to provide either one of vapor-discharge pipe 30 or liquid-intake fill pipe 24.

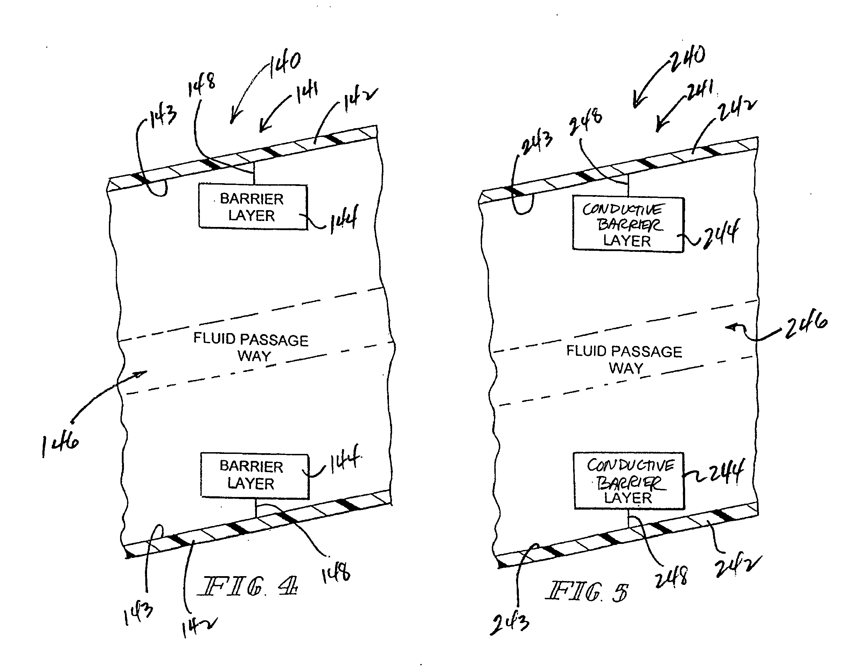

In an illustrative embodiment shown in Fig. 3, a three-layer pipe 50 consists essentially of an outer layer 52, a middle layer 54, and an inner layer 56 defining fluid passageway 58. Three-layer pipe 50 can be used to provide either one of vapor-discharge pipe 30 or liquid-intake fill pipe 24.

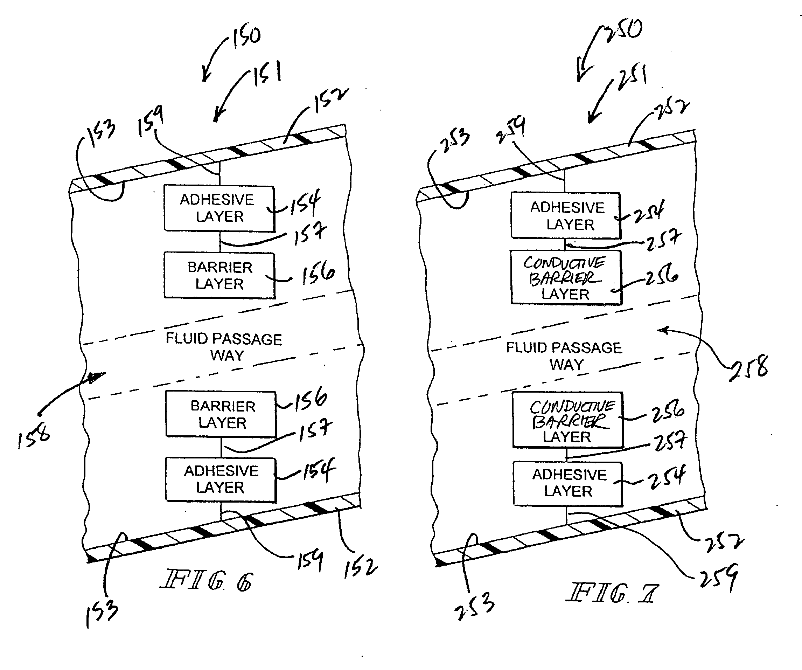

Two different embodiments of two-layer pipe 40 are shown in Figs. 4 and 5. As suggested in Fig. 4, a two-layer pipe 140, in accordance with a first embodiment, comprises a side wall 141 having a barrier layer 144 bonded by a chemical bond 148 to an interior surface 143 of outer layer 142. Two-layer pipe 140 further comprises a fluid passageway 146 surrounded by barrier layer 144. The embodiment of Fig. 4 can be used to provide vapor-discharge pipe 30 of Figs. 1A and 1B, wherein the barrier layer 144 is made of a low-permeation material which acts to contain within pipe 140 any fuel vapor flowing in fluid passageway 146. Barrier layer 144 is made of tetrafluoroethylene (TFE) or polytetrafluoroethylene (PTFE) or ethylene tetrafluoroethylene (ETFE) or polyarylamide (PAA) or polyphthalamide (PPA) or polyphenylene sulfide alloy (PPS) or polybutylene terephthalate (PBT). In an illustrative embodiment, barrier layer 144 is made of polyarylamide. Outer layer 142 is made of high-density polyethylene alloy (HDPE alloy) or polypropylene alloy (PP alloy). In an illustrative embodiment, outer layer 142 is made of HDPE alloy.

As suggested in Fig. 5, a two-layer pipe 240, in accordance with a second embodiment, comprises a side wall 241 having a conductive- barrier layer 244 bonded by a chemical bond 248 to an interior surface 243 of outer layer 242. Two-layer pipe further comprises a fluid passageway 246 surrounded by conductive- barrier layer 244. The embodiment of Fig. 5 can be used to provide either vapor-discharge pipe 30 or liquid-intake fill pipe 24 of Figs. 1A and 1B, wherein conductive- barrier 244 is made of a low-permeation material and is electrically conductive. Conductive- barrier layer 244 acts to contain within fluid passageway 246 any fuel vapor and liquid fuel flowing in fluid passageway 246 and acts as a grounding conduit for static electricity generated by any fuel vapor or liquid fuel flowing in fluid passageway 246. Conductive- barrier layer 244 is made of tetrafluoroethylene (TFE) or polytetrafluoroethylene (PTFE) or ethylene tetrafluoroethylene (ETFE) or polyarylamide (PAA) or polyphthalamide (PPA) or polyphenylene sulfide alloy (PPS) or polybutylene terephthalate (PBT), and one or more of carbon black or carbon nanotubes or stainless steel fibers. In illustrative embodiments, conductive barrier layer 244 is made of polyarylamide and carbon black. Outer layer 242 is made of high-density polyethylene alloy (HDPE alloy) or polypropylene alloy (PP alloy). In an illustrative embodiment, outer layer 242 is made of HDPE alloy.

Two different embodiments of three-layer pipe 50 are shown in Figs. 6 and 7. As suggested in Fig. 6, a three-layer pipe 150, in accordance with a first embodiment, comprises a side wall 151 having a barrier layer 156 bonded by a first chemical bond 157 to adhesive layer 154, which adhesive layer 154 is bonded by a second chemical bond 159 to an interior surface 153 of outer layer 152. Three-layer pipe 150 further comprises a fluid passageway 158 surrounded by barrier layer 156. The embodiment of Fig. 6 can be used to provide vapor-discharge pipe 30 of Figs. 1A and 1B, wherein barrier layer 156 is made of a low-permeation material which acts to contain within fluid passageway 158 any fuel vapor flowing in liquid passageway 158. Barrier layer 156 is made of tetrafluoroethylene (TFE) or polytetrafluoroethylene (PTFE) or ethylene tetrafluoroethylene (ETFE) or polyarylamide (PAA) or polyphthalamide (PPA) or polyphenylene sulfide alloy (PPS) or polybutylene terephthalate (PBT). In an illustrative embodiment, barrier layer 156 is made of polyarylamide (PAA). Adhesive layer 154 is made of an HDPE alloy comprising HDPE and maleic anhydride grafted polymers and/or ionmers (such as PRIEX^{®} material) that have an affinity to bond with the barrier material. The PRIEX^{®} material is available through Solvay Advanced Polymers, L.L.C. In an illustrative embodiment, adhesive layer 154 is made of the HDPE alloy. Outer layer 152 is made of high-density polyethylene (HDPE) or polypropylene alloy (PP alloy). In an illustrative embodiment, outer layer 152 is made of HDPE.

As suggested in Fig. 7, a three-layer pipe 250, in accordance with a second embodiment, comprises a side wall 251 having a conductive barrier layer 256 bonded by a first chemical bond 257 to adhesive layer 254, which adhesive layer 254 is bonded by a second chemical bond 259 to an interior surface 253 of outer layer 252. Three-layer pipe 250 further comprises a fluid passageway 258 surrounded by conductive barrier layer 256. The embodiment of Fig. 7 can be used to provide vapor-discharge pipe 30 or liquid-intake fill pipe 24 of Figs. 1A and 1B, wherein conductive barrier layer 256 is made of a low-permeation material and is electrically conductive. Conductive barrier layer 256 acts to contain within fluid passageway 258 any fuel vapor and liquid fuel flowing in fluid passageway 258 and acts as a grounding conduit for static electricity generated by any fuel vapor or liquid fuel flowing in fluid passageway 258. Conductive barrier layer 256 is made of tetrafluoroethylene (TFE) or polytetrafluoroethylene (PTFE) or ethylene tetrafluoroethylene (ETFE) or polyarylamide (PAA) or polyphthalamide (PPA) or polyphenylene sulfide alloy (PPS) or polybutylene terephthalate (PBT), and one or more of carbon black, carbon nanotubes, or stainless steel fibers. In an illustrative embodiment, conductive barrier layer 256 is made of polyarylamide and carbon black. Adhesive layer 254 is made of an HDPE alloy comprising HDPE and maleic anhydride grafted polymers and/or ionmers (such as PRIEX^{®}) material that have an affinity to bond with the barrier material. The PRIEX^{®} material is available through Solvay Advanced Polymers, L.L.C. In an illustrative embodiment, adhesive layer 254 is made of HDPE alloy. Outer layer 252 is made of high-density polyethylene. In an illustrative embodiment, outer layer 252 is made of HDPE.

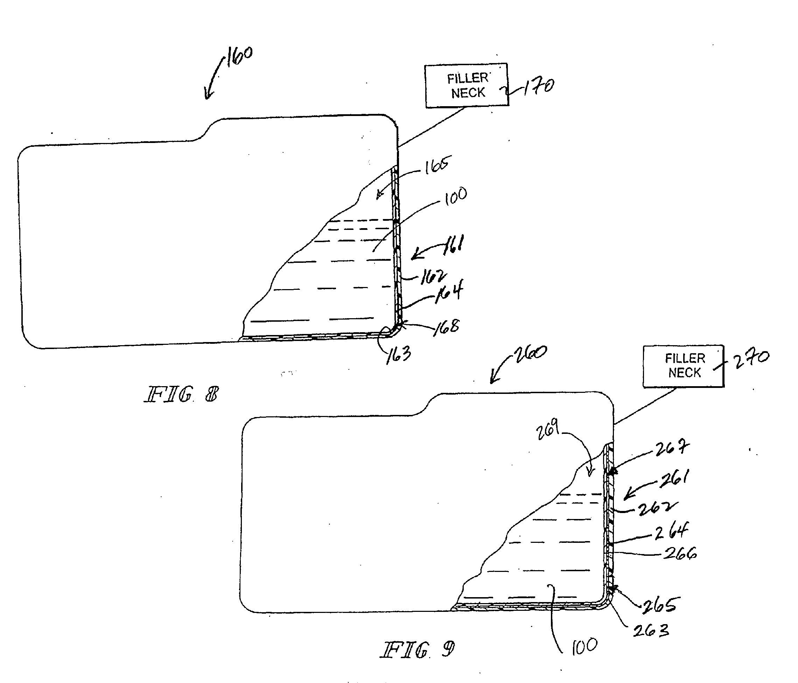

In an illustrative embodiment shown in Fig. 8, a two-layer fuel tank 160 includes a shell 161 including an exterior wall 162 providing a first layer and an interior barrier layer 164 providing a second layer. Interior barrier layer 164 is bonded by a chemical bond 168 to an interior surface 163 of outer layer 162. Fuel tank 160 further includes a fuel-storage reservoir 165 surrounded by interior barrier 164 and filled partly with liquid fuel 100.

A filler neck 170 may be coupled to fuel tank 160, which filler neck 170 may be just a spout or may be the filler neck 14 of Figs. 1A and 1B. Interior barrier layer 164 of filler neck 170 is made of a low-permeation material which acts as a barrier to contain within fuel tank 160 any fuel vapor or liquid fuel stored in fuel-storage reservoir 165.

It is within the scope of the present disclosure to make interior barrier layer 164 of a material having low-permeation and electrically-conductive properties which acts as a barrier to contain within fuel tank 160 any fuel vapor or liquid fuel stored in fuel-storage reservoir 165 and which also acts as a grounding conduit for any static electricity generated by any fuel vapor or liquid fuel moving in fuel-storage reservoir 165. Interior barrier layer 164 is made of tetrafluoroethylene (TFE) or polytetra-flouroethylene (PTFE) or ethylene tetrafluoroethylene (ETFE) or polyarylamide (PAA) or polyphthalamide (PPA) or polyphenylene sulfide alloy (PPS) or polybutylene terephthalate (PBT) alone (as a barrier layer) or in combination with one or more of carbon black, carbon nanotubes, or stainless steel fibers (as a conductive barrier layer). In illustrative embodiments, interior barrier layer 164 is made of polyarylamide (PAA) as a low-permeation material and made of carbon black as an electrically-conductive material. Exterior wall 162 is made of high-density polyethylene alloy (HDPE alloy) or polypropylene alloy (PP alloy). In an illustrative embodiment, exterior wall 162 is made of HDPE alloy.

In an illustrative embodiment shown in Fig. 9, a three-layer fuel tank 260 includes a shell 261 including an exterior wall or outer layer 262, an intermediate adhesive layer 264, and an interior barrier layer 266. Interior barrier layer 266 is bonded by a first chemical bond 267 to intermediate adhesive layer 264. Adhesive layer 264 is bonded by a second chemical bond 265 to an interior surface 263 of outer layer 262. Fuel tank 260 further includes a fuel-storage reservoir 269 surrounded by interior barrier layer 266.

A filler neck 270 may be coupled to fuel tank 260, which filler neck 270 may be just a spout or may be the filler neck 14 of Figs. 1A and 1B. Interior barrier layer 266 of filler neck 270 is made of a low-permeation material which acts as a barrier to contain with fuel tank 260 any fuel vapor or liquid fuel stored in fuel storage area 269.

It is within the scope of this disclosure to make interior barrier layer 266 of a material having low-permeation material and electrically-conductive properties which acts as a barrier to contain with fuel tank 260 any fuel vapor or liquid fuel stored in fuel-storage reservoir 269 and which also acts as a grounding conduit for any static electricity generated by any fuel vapor or liquid fuel in fuel-storage reservoir 269. Interior barrier layer 266 is made of tetrafluoroethylene (TFE) or polytetrafluoroethylene (PTFE) or ethylene tetrafluoroethylene (ETFE) or polyarylamide (PAA) or polyphthalamide (PPA) or polyphenylene sulfide alloy (PPS) or polybutylene terephthalate (PBT) alone (as a barrier layer) or in combination with one or more of carbon black, carton nanotubes, or stainless steel fibers (as a conductive barrier layer). In illustrative embodiments, interior barrier layer 266 is made of polyarylamide (PAA) as a low-permeation material and made of carbon black as an electrically-conductive material. Adhesive layer 264 is made of high density polyethylene alloy (HDPE alloy) comprising HDPE and maleic anhydride grafted polymers and/or ionmers (such as PRIEX^{®} material) that have an affinity to bond with the barrier material. The PRIEX^{®} material is available from Solvay Advanced Polymers, L.L.C. In an illustrative embodiment, adhesive layer 264 is made of HDPE alloy. Exterior wall 262 is made of a high density polyethylene (HDPE) or polypropylene alloy (PP alloy). In an illustrative embodiment, exterior wall 262 is made of HDPE.

In the illustrative embodiments, for example, each of chemical bonds 148, 248, 157, 257, 168, and 267 include a chemical bond of polyarylamide (PAA) and the maleic anhydride component of HDPE alloy. Chemical bonds 159, 259, and 265 each include a chemical bond of HDPE and the HDPE component of HDPE alloy. Such bondings may occur, for example, by heating and/or pressure.

It is within the scope of the present disclosure that outer layers 42, 52, 142, 242, 152, 252, 162, and 262, and adhesive layers 154, 254, and 264 may comprise material or materials that include electrically-conductive properties. In such an embodiment or embodiments, that could eliminate a need for a mechanical device to provide a conductive path from an inside diameter of pipes 24, 30 to an outside diameter of pipes 24, 30 or from inner layers 164, 266 to outer layers 162, 262 of fuel tanks 160 and 260.

Two- and three-layer constructions of the type disclosed herein are sufficient to achieve suitable and desired barrier and conductivity properties. It is thus unnecessary to use, for example, five-, six-, and seven-layer constructions to achieve desired barrier and conductivity properties.

## Claims

1. A pipe consisting essentially of two-layers, the two-layers comprising
an exterior side wall providing a first layer,
an interior barrier layer providing a second layer and being located interior of the exterior side wall, the interior barrier layer including an interior surface defining and surrounding a fluid passageway formed by the interior barrier layer, and
means for chemically bonding an interior surface of the exterior side wall to an exterior surface of the interior barrier layer, wherein the interior barrier layer is made of a low-permeation material which acts to contain within the exterior side wall any fuel vapor flowing in the fluid passageway so that hydrocarbon material associated with that fuel vapor is retained in the fluid passageway.

2. The pipe of claim 1, wherein the exterior side wall, interior barrier layer, and means for chemically bonding cooperate to form a fill pipe included in a fuel tank filler neck and formed to include one end adapted to mate with a fuel tank and an opposite end adapted to mate with a pipe closure cap.

3. The pipe of claim 2, in combination with an auxiliary pipe consisting essentially of two-layers, the two-layers comprising
an exterior side wall providing a first layer,
an interior barrier layer providing a second layer and being located interior of the exterior side wall of the auxiliary pipe, the interior barrier layer of the auxiliary pipe including an interior surface defining and surrounding an auxiliary fluid passageway formed in the interior barrier layer of the auxiliary pipe,
means for chemically bonding an interior surface of the exterior side wall of the auxiliary pipe to an exterior surface of the interior barrier layer of the auxiliary pipe, wherein the interior barrier layer of the auxiliary pipe is made of a low-permeation material which acts to contain within the exterior side wall of the auxiliary pipe any fuel vapor flowing in the auxiliary fluid passageway so that hydrocarbon material associated with that fuel vapor is retained in the auxiliary fluid passageway, and
a web interconnecting the exterior side walls of the pipe and of the auxiliary pipe.

4. A pipe consisting essentially of three-layers, the three-layers comprising
an exterior side wall providing a first layer,
an interior barrier layer providing a second layer and being located interior of the exterior side wall, the interior barrier layer including an interior surface defining and surrounding a fluid passageway formed in the interior barrier layer,
an intermediate adhesive layer providing a third layer and being interposed between the exterior side wall and the interior barrier layer,
first means for chemically bonding an exterior surface of the interior barrier layer to the intermediate adhesive layer, and
second means for chemically bonding an interior surface of the exterior side wall to the intermediate adhesive layer, wherein the interior barrier layer is made of a low-permeation material which acts to contain within the exterior side wall any fuel vapor flowing in the fluid passageway so that hydrocarbon material associated with that fuel vapor is retained in the fluid passageway.

5. The pipe of claim 4, wherein the exterior side wall, intermediate barrier layer, intermediate adhesive layer, and first and second means for chemically bonding cooperate to form a fill pipe included in a fuel tank feather neck and formed to include one end adapted to mate with a fuel tank and an opposite end adapted to mate with a pipe closure cap.

6. The pipe of claim 5, in combination with an auxiliary pipe consisting essentially of three-layers, the three-layers comprising
an exterior side wall providing a first layer,
an interior barrier layer providing a second layer and being located interior of the exterior side wall of the auxiliary pipe, the interior barrier layer of the auxiliary pipe including an interior surface defining and surrounding a fluid passageway formed in the interior barrier layer of the auxiliary pipe,
an intermediate adhesive layer providing a third layer and being interposed between the exterior side wall of the auxiliary pipe and the interior barrier layer of the auxiliary pipe,
first means for chemically bonding an exterior surface of the interior barrier layer of the auxiliary pipe to the intermediate adhesive layer of the auxiliary pipe,
second means for chemically bonding an interior surface of the exterior side wall of the auxiliary pipe to the intermediate adhesive layer, wherein the interior barrier layer of the auxiliary pipe is made of a low-permeation material which acts to contain within the exterior side wall of the auxiliary pipe any fuel vapor flowing in the auxiliary fluid passageway so that hydrocarbon material associated with that fuel vapor is retained in the auxiliary fluid passageway, and
with a web interconnecting the exterior side walls of the pipe and the auxiliary pipe.

7. A fuel tank consisting essentially of two-layers, the two-layers comprising
an exterior wall providing a first layer,
an interior barrier layer providing a second layer and being located in an interior region defined by the exterior wall, the interior barrier layer including an interior surface defining and surrounding a fuel-storage reservoir formed in the interior barrier layer, and
means for chemically bonding an interior surface of the exterior wall to an exterior surface of the interior barrier layer, wherein the interior barrier layer is made of a low-permeation material which acts to contain within the exterior wall any liquid fuel and fuel vapor extant in the fuel-storage reservoir so that hydrocarbon material associated with that fuel vapor is retained in the fuel-storage reservoir.

8. The pipe of claim 1 or the fuel tank of claim 7, wherein the interior barrier layer is made of polyarylamide (PAA) and the exterior side wall is made of a high-density polyethylene alloy (HDPE alloy).

9. The pipe of claim 1 or the fuel tank of claim 7, wherein the interior barrier layer is made of one of tetrafluoroethylene (TFE), polytetrafluoroethylene (PTFE), ethylene tetrafluoroethylene (ETFE), polyarylamide (PAA), polyphthalimide (PPA), polyphenylene sulfide alloy (PPS), and polybutylene terephthalate (PBT).

10. The pipe or fuel tank of claim 9, wherein the exterior side wall or exterior wall respectively is made of one of high-density polyethylene alloy (HDPE alloy and polypropylene alloy (PP alloy).

11. The pipe or fuel tank of claim 9 or claim 10, wherein the interior barrier layer further comprises at least one of carbon black, carbon nanotubes, and stainless steel fibers to cause the interior barrier layer to be electrically conductive and to act as a grounding conduit for static electricity generated for any fuel vapor and liquid fuel flowing in the fluid passageway or moving in the fuel-storage reservoir respectively.

12. A fuel tank consisting essentially of three-layers, the three-layers comprising
an exterior wall providing a first layer,
an interior barrier layer providing a second layer and being located in an interior region defined by the exterior wall, the interior barrier layer including an interior surface defining and surrounding a fuel-storage region formed in the interior barrier layer,
an intermediate adhesive layer interposed between the exterior wall and the interior barrier layer,
first means for chemically bonding an exterior surface of the interior barrier layer to the intermediate adhesive layer, and
second means for chemically bonding an interior surface of the exterior side wall to the intermediate adhesive layer, wherein the interior barrier layer is made of a low-permeation material which acts to contain within the exterior side wall any fuel vapor flowing in the fluid passageway so that hydrocarbon material associated with that fuel vapor is retained in the fluid passageway.

13. The pipe of claim 4 or the fuel tank of claim 12, wherein the adhesive layer is made of an HDPE alloy, the interior barrier layer is made of polyarylamide (PAA), and the exterior side wall is made of a high-density polyethylene alloy (HDPE alloy).

14. The pipe or the fuel tank of claim 13, wherein the HDPE alloy included in the adhesive layer comprises HDPE and at least one of maleic anhydride grafted polymers and ionmers **characterized by** an affinity to bond to the interior barrier layer.

15. The pipe of claim 4 or the fuel tank of claim 12, wherein the interior barrier layer is made of one of tetrafluoroethylene (TFE), polytetrafluoroethylene (PTFE), ethylene tetrafluoroethylene (ETFE), polyarylamide (PAA), polyphthalimide (PPA), polyphenylene sulfide alloy (PPS), and polybutylene terephthalate (PBT).

16. The pipe or fuel tank of claim 15, wherein the exterior side wall is made of one of high-density polyethylene alloy (HDPE alloy) and polypropylene alloy (PP alloy).

17. The pipe or fuel tank of claim 15 or claim 16, wherein the interior barrier layer further comprises at least one of carbon black, carbon nanotubes, and stainless steel fibers to cause the interior barrier layer to be electrically conductive and to act as a grounding conduit for static electricity generated for any fuel vapor and liquid fuel flowing in the fluid passageway or moving in the fuel-storage reservoir respectively.
